# EUROPÄISCHE PATENTSCHRIFT

(11) **EP 1 362 404 B1**
(45) Veröffentlichungstag und Bekanntmachung des Hinweises auf die Patenterteilung: **10.08.2005**
(21) Anmeldenummer: 01995608.5
(22) Anmeldetag: 18.12.2001
(51) Int. Cl.: H02K 1/22

(54) **ELEKTRISCHE MASCHINE**
ELECTRICAL MACHINE
MACHINE ELECTRIQUE

(30) Priorität: 13.02.2001 DE 10106519
(43) Veröffentlichungstag der Anmeldung: 19.11.2003
(73) Patentinhaber: ROBERT BOSCH GMBH, 70442 Stuttgart (DE)
(72) Erfinder: GAMM, Oliver, 73054 Eislingen (DE); WINTER, Falko, 71636 Ludwigsburg (DE); SHENDI, Alexander, 71679 Asperg (DE); GROETER, Hans-Peter, 71665 Vaihingen (DE); DEBARD, Jérome, 28498 Cardiff CF5 1EP (GB)
(86) Internationale Anmeldenummer: PCT/DE2001/004738
(87) Internationale Veröffentlichungsnummer: WO 2002/065617

(56) Entgegenhaltungen:
- EP-A- 1 065 776
- FR-A- 2 786 625
- FR-A- 2 793 085

## Beschreibung

Die Erfindung betrifft eine elektrische Maschine, insbesondere einen Generator für ein Kraftfahrzeug, gemäß dem Oberbegriff des Anspruches 1.

Aus der FR 2 793 085 A sind gattungsgemäße Klauenpol-Generatoren bekannt.

Aus der FR 2 786 625 A1 ist ein Klauenpol-Generator mit ineinander greifenden Klauenpolen bekannt. Zwischen benachbart angeordneten Klauenpolen ist jeweils ein Permanentmagnet angeordnet, dessen axiale Magnetlänge mit der axialen Klauenüberlappung übereinstimmt.

Diese bekannten Klauenpol-Generatoren haben, was ihre Wirkungsgrade angeht, noch Verbesserungspotential.

Aus der EP 0 762 617 B1 ist ebenfalls ein Klauenpol-Generator bekannt, bei dem zwischen benachbarten Klauenpolen Permanentmagnete zur Reduktion des Streuflusses angeordnet sind. Bei einem Verhältnis der Länge der Magnete zur Überlappung der Klauen zwischen 50 % und 80 % soll die Stromzunahme, bezogen auf das Gewicht der Magnete, ein Maximum besitzen. Dies wird mit einem raschen Abfall der Induktion des Streufeldes zwischen den Klauen beim Überschreiten der angegebenen Länge begründet, so daß sich eine Steufeld-Kompensation durch Permanentmagnete nicht mehr lohnt. Dieser Effekt tritt jedoch nur bei Klauenpolen auf, deren Höhe an der Spitze relativ gering ist.

Der Erfindung liegt die Aufgabe zugrunde, eine elektrische Maschine, insbesondere einen Generator, mit einer verbesserten Leistung zu schaffen.

Die Erfindung wird durch die Merkmale des kennzeichnenden Teils des Anspruches 1 gelöst. Der Kern der Erfindung besteht darin, den Überlappungsbereich zwischen benachbarten Klauenpolen möglichst vollständig durch einen Permanentmagneten auszufüllen, wobei die Höhe jedes Klauenpols an der Klauenpol-Spitze nicht geringer ist als ein Viertel der Höhe des Klauenpols an der Klauenpol-Wurzel. Gemäß weiteren Ausgestaltungen der Erfindung hat es sich als vorteilhaft erwiesen, die Klauenpole an ihren Spitzen mit einer Mindesthöhe auszustatten.

Weitere vorteilhafte Ausgestaltungen der Erfindung ergeben sich aus den Unteransprüchen.

Zusätzliche Merkmale und Einzelheiten der Erfindung ergeben sich aus der Beschreibung eines Ausführungsbeispiels anhand der Zeichnung. Es zeigen
- Fig. 1: einen Querschnitt eines Generators mit einem Klauenpol-Läufer,
- Fig. 2: einen Querschnitt gemäß der Schnittlinie II-II in Fig. 1,
- Fig. 3: eine Draufsicht auf den Klauenpol-Läufer,
- Fig. 4: einen Querschnitt gemäß der Schnittlinie IV-IV in Fig. 3,
- Fig. 5: ein Diagramm mit dem Verlauf des Generatorstromzuwachses und des Generatorstromzuwachses pro Magnetmasse, aufgetragen über die normierte Magnetlänge und
- Fig. 6: ein Diagramm, welches die normierte Querschnittsfläche eines erfindungsgemäßen Klauenpols an verschiedenen Stellen darstellt.

Ein als elektrische Maschine ausgebildeter Generator 1 für Kraftfahrzeuge weist ein aus zwei Gehäusehälften 2, 3 bestehendes Druckguß-Gehäuse 4 auf. Die Gehäusehälfte 2 ist als Lagerschild für ein Antriebslager 5 ausgebildet. Die Gehäusehälfte 3 ist als Lagerschild für ein Kugellager 6 ausgebildet. In dem Gehäuse 4 ist mittig ein Ständerblechpaket 7 fixiert, welches in bekannter Weise eine dreiphasige Ständerwicklung 8 zur Erzeugung eines Drehstromes aufnimmt. Das Ständerblechpaket 7 weist mittig eine Ständerbohrung 9 auf, in der ein Klauenpol-Läufer 10 mit einer Läuferwelle 11 angeordnet ist, wobei letztere in den Lagern 5 und 6 um eine Drehachse 12 drehbar gelagert ist. Die Läuferwelle 11 trägt im mittleren Bereich einen magnetisch leitenden Ringkern 13, auf dem eine als Läuferwicklung ausgebildete Erregerwicklung 14 angeordnet ist. In axialer Richtung vor und hinter dem Ringkern 13 sind Klauenpol-Platinen 15 und 16 auf der Läuferwelle 11 befestigt, deren fingerförmige Klauenpole 17 zur Bildung eines Wechselfeldes mit Abstand ineinander greifen.

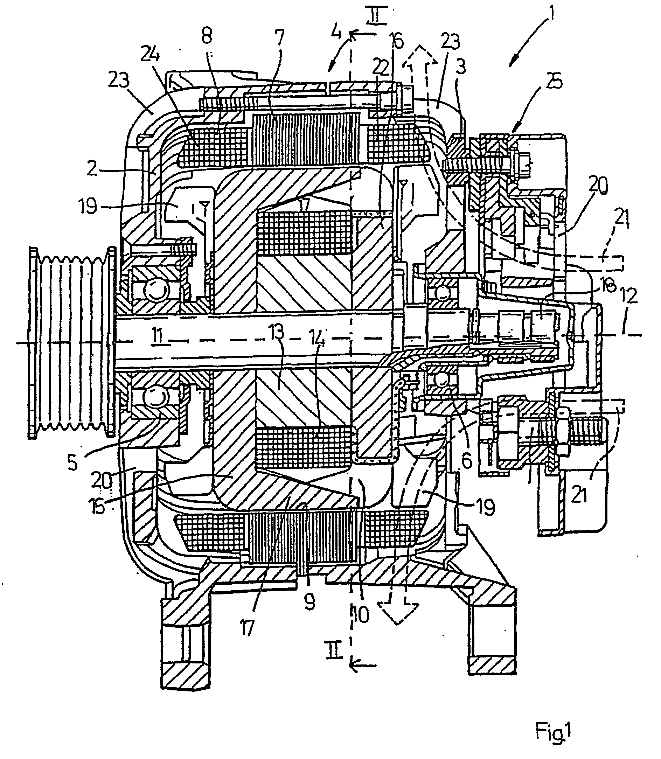

Zur Stromversorgung der Erregerwicklung 14 ist am in Fig. 1 rechten Ende der Läuferwelle 11 eine Schleifring-Anordnung 18 vorgesehen, von der je ein Schleifring mit einem Ende der Erregerwicklung 14 elektrisch verbunden ist. Die Schleifringe wirken in bekannter Weise mit einer nicht dargestellten Kohlebürsten-Vorrichtung zusammen, in die ein Regler integriert ist, mit dem der in der Erregerwicklung 14 fließende Gleichstrom entsprechend dem Bedarf im Bordrietz des Kraftfahrzeuges geregelt wird. An den außenseitigen Stirnseiten der Klauenpol-Platinen 15 und 16 ist jeweils ein Lüfterrad 19 befestigt, das durch Schlitze 20 in der Gehäusehälfte einen Kühlluftstrom 21 axial ansaugt und radial an dem hinteren Wickelkopf 22 der Ständerwicklung 8 vorbei durch radiale Schlitze 23 nach außen bläst. Das in Fig. 1 an der linken Stirnseite der Klauenpol-Platine 15 angeordnete Lüfterrad 19 saugt einen Kühlluftstrom axial durch Schlitze 20 inderGehäusehälfte 2 an und bläst diese am vorderen Wickelkopf 24 der Ständerwicklung 8 vorbei durch außenliegende Schlitze 23 nach außen. In dem vom in Fig. 1 rechten Lüfterrad 19 axial angesaugten Kühlluftstrom 21 befindet sich an der äußeren Stirnseite der hinteren Gehäusehälfte 3 eine Gleichrichter-Baueinheit 25, die mit den Wicklungsausgängen der Ständerwicklung 8 zur Gleichrichtung des dort induzierten Drehstromes in bekannter Weise eingangsseitig verschaltet ist. Am Ausgang der Gleichrichter-Baueinheit 25 ist in bekannter Weise die zur Versorgung des Kraftfahrzeug-Bordnetzes benötigte Gleichspannung abzugreifen.

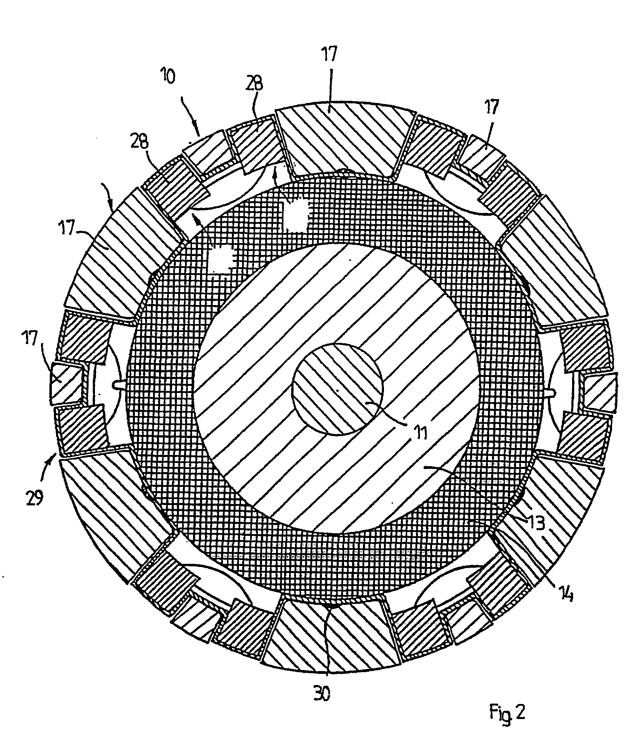

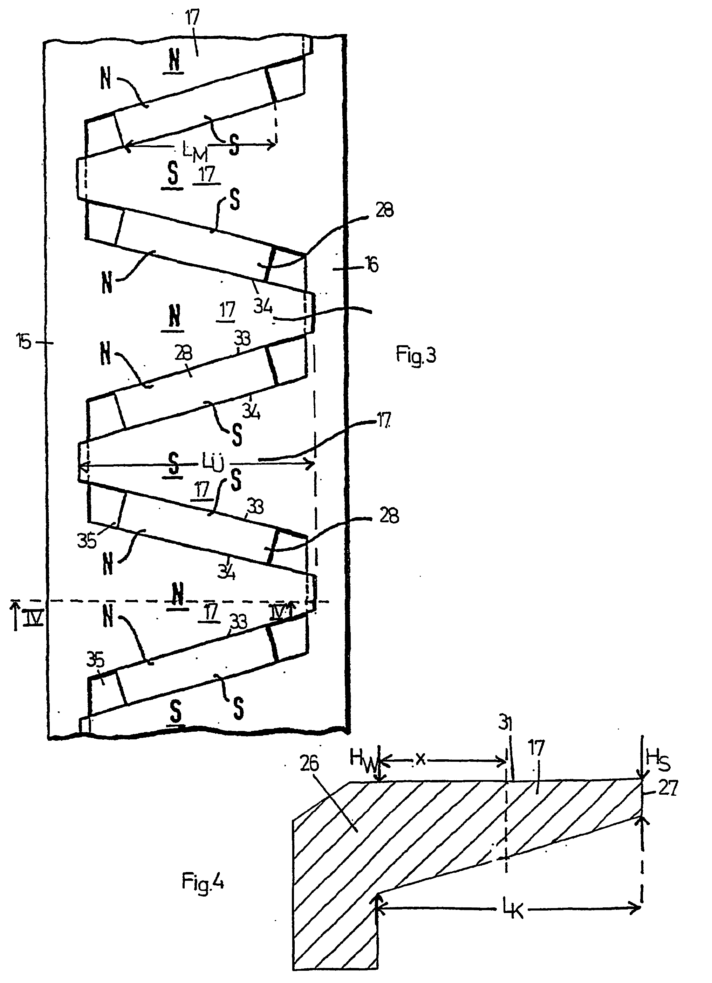

Im folgenden wird unter Bezugnahme auf die Fig. 2 bis 4 der Aufbau des Klauenpol-Läufers 10 beschrieben. Die Klauenpole 17 der Klauenpol-Platine 15 erstrecken sich von einer Klauenpol-Wurzel 26 in axialer Richtung hin zu einer Klauenpol-Spitze 27 in Richtung auf die Klauenpol-Platine 16. Die mit der Klauenpol-Platine 16 verbundenen Klauenpole 17 erstrecken sich in umgekehrter Richtung und greifen abwechselnd fingerartig in die anderen Klauenpole 17 ein. Zwischen benachbarten Klauenpolen 17 ist jeweils ein quaderförmig ausgebildeter Permanentmagnet 28 angeordnet. Die Permanentmagnete 28 sind gegenüber den Klauenpolen 17 beispielsweise durch eine im wesentlichen meanderförmige Haltehülse 29 gehalten, die im Bereich der Klauenpole 17 unterhalb des jeweiligen Klauenpols 17 verläuft und im Bereich der Permanentmagnete 28 oberhalb des jeweiligen Permanentmagneten 28 verläuft. Die Haltehülse 29 ist über Schweißstellen 30 mit den Klauenpolen 17 verbunden. Der genauere Aufbau der Haltehülse 29 für die Permanentmagneten 28 ist aus der DE 198 02 784 A1 bekannt, auf die hiermit verwiesen wird. Durch die Haltehülse 29 werden die Permanentmagneten 28 gegenüber Zentrifugalkräften abgestützt.

Die einzelnen Klauenpole 17 weisen eine Oberseite 31 sowie eine sich von der Wurzel 26 zur Spitze 27 schräg nach oben erstreckende Unterseite 32 auf. An der Wurzel weist der Klauenpol 17 eine Höhe H_{W} auf. An der Spitze beträgt die Höhe H_{S}. Der Klauenpol 17 weist von der Wurzel 26 zur Spitze 27 eine Länge L_{K} auf. Der Klauenpol 17 weist zwei symmetrisch aufeinander zulaufende Seitenwände 33 und 34 auf. An der Wurzel weist der Klauenpol 17 senkrecht zur Drehachse 12 eine Querschnittsfläche F_{W} auf. An der Spitze 27 beträgt die Querschnittsfläche F_{S}. Die Permanentmagneten 28 weisen eine axiale Länge L_{M} auf. Benachbarte Klauenpole 17 weisen, gemessen von der Spitze 27 des einen Klauenpols 17 zur Spitze 27 des anderen Klauenpols 17, eine axiale Klauenüberlappung L_{Ü} auf. Für das Verhältnis der Magnetlänge L_{M} zur Klauenüberlappung L_{Ü} gilt: L_{M}/L_{Ü} ≥ 0,81, insbesondere 0,81 ≤ L_{M}/L_{Ü} ≤1,1 und besonders vorteilhaft 0,9 ≤ L_{M}/L_{Ü} ≤ 1,0. Für das Verhältnis der Querschnittsflächen F_{S} und F_{W} gilt: F_{S}/F_{W} ≥ 0,04 und insbesondere F_{S}/F_{W} ≥ 0,08. Für das Verhältnis der Höhen H_{S} und H_{W} gilt: H_{S}/H_{W} ≥ 0,25 und insbesondere H_{S}/H_{W} ≥ 0,3. In einer besonders vorteilhaften Ausgestaltung gilt: H_{S} ≥ 4 mm insbesondere 7 mm. Der Raum zwischen der Seitenwand 33 eines Klauenpols 17 und der Seitenwand 34 eines benachbarten Klauenpols 17 wird als Überlappungsraum 35 bezeichnet. Die Permanentmagnete 28 befinden sich ungefähr axial mittig in dem Überlappungsraum 35. Die Polung der Magnete 28 ist derart gewählt, daß sie der Polung des benachbarten Klauenpols 17 im durch die Erregerwicklung 14 erregten Zustand entspricht. Ist zum Beispiel ein Klauenpol 17 als magnetischer Südpol gepolt, so weisen die beiden an ihn angrenzenden Magnete 28 jeweils mit der Südpol-Seite auf diesen Klauenpol 17 hin. Durch die Magnete 28 wird der magnetische Streufluß durch die Klauenpole 17 unterdrückt und sogar ein Nutzfluß erzeugt.

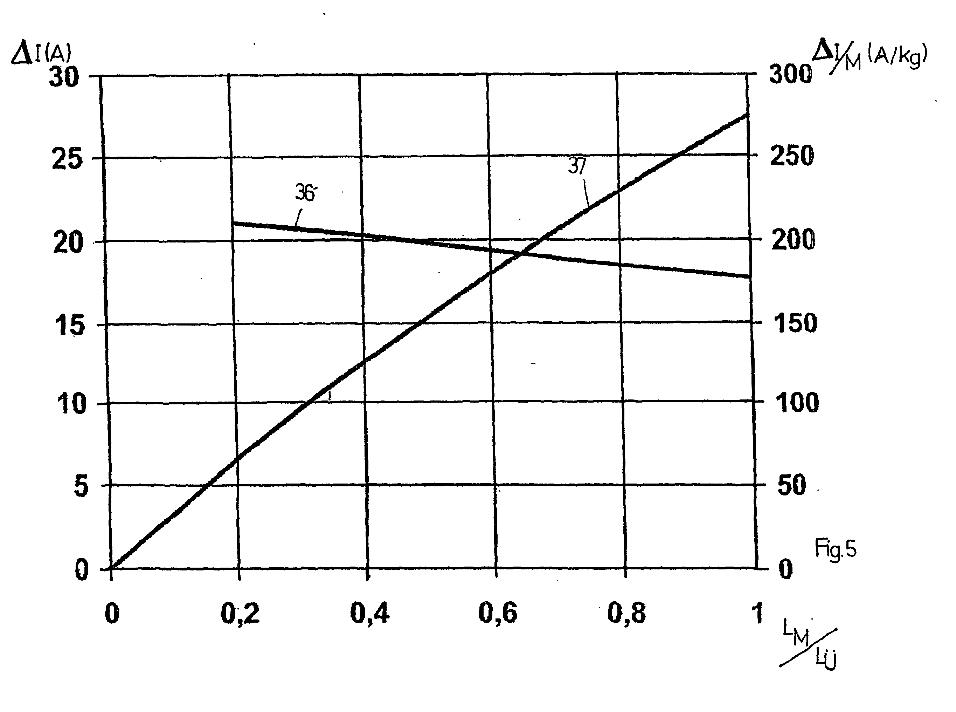

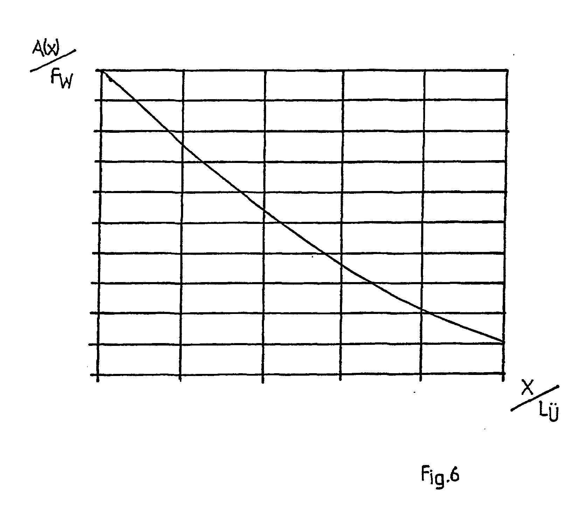

Im folgenden wird die Funktion des Generators 1 beschrieben. Die allgemeine Funktionsweise eines Drehstromgenerators der beschriebenen Art ist seit langem bekannt. Durch die besonders vollständige Ausfüllung des Überlappungsraumes 35 durch einen Magneten 28, d. h. L_{M}/L_{Ü} ≥ 0,81, kann eine weitere Leistungssteigerung des Generators durch eine zusätzliche Streufeld-Kompensation erreicht werden. In Fig. 5 sind über der normierten Magnetlänge L_{M}/L_{Ü} zwei Kennlinien 36 und 37 aufgetragen. Die Kennlinie 37 zeigt den Zuwachs des Generatorstromes ΔI. Es ist erkennbar, daß der Generatorstromzuwachs stetig mit einer zunehmenden Ausfüllung des Überlappungsraumes 35 durch einen Magneten 28 ansteigt. Die Kennlinie 36 stellt den Zuwachs des Generatorstromes ΔI pro Gesamtmasse M der Magnete 28 dar. Es ist erkennbar, daß ΔI/M stetig abfällt. Wesentlich ist jedoch, daß der Zuwachs des Generatorstromes noch ansteigt, obwohl der Zuwachs des Generatorstromes pro Magnetmasse abfällt. Es ist deshalb sinnvoll, den Überlappungsraum 35 möglichst vollständig auszufüllen. Die Kennlinien 36, 37 gelten unter der Prämisse, daß für die Querschnittsflächen F_{S} und F_{W} und die Höhen H_{S} und H_{W} die oben angegebenen Verhältnisse eingehalten werden. In Fig. 6 ist einer Kennlinie die Dimensionierung des Klauenpols 17 genauer dargestellt. Auf der X-Achse ist ein bestimmter Querschnittsbereich des Klauenpols 17 im Abstand X von der Wurzel 26, normiert mit der Klauenüberlappung L_{Ü} angetragen. Auf der Y-Achse ist die Querschnittsfläche A(X) des Klauenpols 17 im Abstand X von der Wurzel 26, normiert mit der Fläche F_{W} angetragen. Es ist erkennbar, daß mit zunehmendem Abstand X von der Wurzel 26 die Querschnittsfläche abnimmt. Die Abnahme ist jedoch langsamer als bei Klauenpolen gemäß dem Stand der Technik. Dies bedeutet, daß die Kennlinie gemäß Fig. 6 oberhalb der Kennlinien anderer Klauenpole gemäß dem Stand der Technik liegt.

Durch eine vollständigere Ausfüllung des Überlappungsraumes 35 bei gleichzeitiger Sicherstellung ausreichend hoher Spitzen 27 ist somit eine Leistungssteigerung des Generators 1 möglich.

## Patentansprüche

1. Elektrische Maschine, insbesondere Generator für ein Kraftfahrzeug,
a) mit einem Gehäuse (4) und
b) mit einem in dem Gehäuse (4) um eine Drehachse (12) drehbar gelagerten Läufer (10), welcher aufweist,
i) mindestens eine Läuferwicklung (14),
ii) eine Vielzahl von umfangsseitig angeordneten Klauenpolen (17), wobei benachbarte Klauenpole (17) eine axiale Klauenüberlappung L_{Ü} aufweisen und
iii) Permanentmagnete (28) mit einer axialen Magnetlänge L_{M}, wobei jeweils mindestens ein Permanentmagnet (28) zwischen benachbarten Klauenpolen (17) angeordnet und derart magnetisiert ist, daß ein Streufluß zwischen den Klauenpolen (17) unterdrückt wird,
c) mit einem Verhältnis der axialen Magnetlänge L_{M} zur axialen Klauenüberlappung Ln von L_{M}/L_{Ü} ≥ 0,81,
wobei
d) sich die Klauenpole (17) von einer Klauenpol-Wurzel (26) zu einer Klauenpol-Spitze (27) axial erstrecken und
e) jeder Klauenpol (17) an der Klauenpol-Wurzel (26) eine Höhe H_{W} und an der Klauenpol-Spitze (27) eine Höhe H_{S} aufweist,
**dadurch gekennzeichnet, daß**
f) für das Verhältnis der Höhe H_{S} an der Klauenpol-Spitze (27) zur Höhe H_{W} an der Klauenpol-Wurzel (26) gilt: H_{S}/H_{W} ≥ 0,25.

2. Elektrische Maschine gemäß Anspruch 1, **dadurch gekennzeichnet, daß** für das Verhältnis der Höhe H_{S} an der Klauenpol-Spitze (27) zur Höhe H_{W} an der Klauenpol-Wurzel (26) gilt: H_{S} / H_{W} ≥ 0,3.

3. Elektrische Maschine gemäß Anspruch 1, **dadurch gekennzeichnet, daß** für das Verhältnis der Magnetlänge L_{M} zur Klauenüberlappung L_{Ü} gilt: 0,81 ≤ L_{M}/L_{Ü} ≤ 1.1.

4. Elektrische Maschine gemäß Anspruch 1, **dadurch gekennzeichnet, daß** ein Klauenpol (17) an der Klauenpol-Wurzel (26) eine Querschnittsfläche F_{W} und an der Klauenpol-Spitze (27) eine Querschnittsfläche F_{S} aufweist.

5. Elektrische Maschine gemäß Anspruch 4, **dadurch gekennzeichnet, daß** für das Verhältnis der Querschnittsfläche F_{S} an der Klauenpol-Spitze (27) zur Querschnittsfläche F_{W} an der Klauenpol-Wurzel (26) gilt: F_{S}/F_{W} ≥ 0,04, insbesondere F_{S}/F_{W} ≥ 0,08.

6. Elektrische Maschine gemäß Anspruch 1, **dadurch gekennzeichnet, daß** für die Höhe H_{S} des Klauenpols (17) an der Klauenpol-Spitze (27) gilt: H_{S} ≥ 4 mm, insbesondere H_{S} ≥ 7 mm.

7. Elektrische Maschine gemäß einem der vorangehenden Ansprüche, **dadurch gekennzeichnet, daß** jeder Permanentmagnet (28) im wesentlichen axial mittig in einem Überlappungsraum (35) zwischen benachbarten Klauenpolen (17) angeordnet ist.

8. Elektrische Maschine gemäß Anspruch 3, **dadurch gekennzeichnet, daß** das Verhältnis der Magnetlänge L_{M} zur Klauenüberlappung L_{Ü} gilt: 0,9 ≤ L_{M}/L_{Ü} ≤ 1,0.

## Claims

1. Electrical machine, in particular a generator for a motor vehicle,
a) having a housing (4) and
b) having a rotor (10) which is mounted in the housing (4) such that it can rotate about an axis of rotation (12) and has
i) at least one rotor winding (14),
ii) a large number of claw poles (17) which are arranged on the circumference, adjacent claw poles (17) having an axial claw overlap L_{Ü}, and
iii) permanent magnets (28) with an axial magnet length L_{M}, at least one permanent magnet (28) being arranged between adjacent claw poles (17) in each case and being magnetized in such a way that any stray flux between the claw poles (17) is suppressed,
c) having a ratio of axial magnet length L_{M} to axial claw overlap L_{Ü} of L_{M}/L_{Ü} ≥ 0.81,
wherein
d) the claw poles (17) extend axially from a claw-pole root (26) to a claw-pole tip (27) and
e) each claw pole (17) has a height H_{W} at the claw-pole root (26) and a height H_{S} at the claw-pole tip (27),
**characterized in that**
f) the ratio of the height H_{S} at the claw-pole tip (27) to the height H_{W} at the claw-pole root (26) is H_{S}/H_{W} ≥ 0.25.

2. Electrical machine according to Claim 1, **characterized in that** the ratio of the height H_{S} at the claw-pole tip (27) to the height H_{W} at the claw-pole root (26) is H_{S}/H_{W} ≥ 0.3.

3. Electrical machine according to Claim 1, **characterized in that** the ratio of the magnet length L_{M} to the claw overlap L_{Ü} is 0.81 ≤ L_{M}/L_{Ü} ≤ 1.1.

4. Electrical machine according to Claim 1, **characterized in that** a claw pole (17) has a cross-sectional area F_{W} at the claw-pole root (26) and a cross-sectional area F_{S} at the claw-pole tip (27).

5. Electrical machine according to Claim 4, **characterized in that** the ratio of the cross-sectional area F_{S} at the claw-pole tip (27) to the cross-sectional area F_{W} at the claw-pole root (26) is F_{S}/F_{W} ≥ 0.04, in particular F_{S}/F_{W} ≥ 0.08.

6. Electrical machine according to Claim 1, **characterized in that** the height H_{S} of the claw pole (17) at the claw-pole tip (27) is H_{S} ≥ 4 mm, in particular H_{S} ≥ 7 mm.

7. Electrical machine according to one of the preceding claims, **characterized in that** each permanent magnet (28) is arranged essentially axially in the centre of an overlap area (35) between adjacent claw poles (17).

8. Electrical machine according to Claim 3, **characterized in that** the ratio of the magnet length L_{M} to the claw overlap L_{Ü} is 0.9 ≤ L_{M}/L_{Ü} ≤ 1.0.

## Revendications

1. Machine électrique, en particulier générateur pour un véhicule automobile, comportant :
a) un boîtier (4) et
b) un rotor (10) logé de façon rotative dans le boîtier (4) autour d'un axe de rotation (12), et qui présente
i) au moins un enroulement de rotor (14),
ii) une pluralité de griffes (17) disposées sur la périphérie, des griffes (17) voisines présentant un chevauchement axial des griffes L_{Ü} et
iii) des aimants permanents (28) ayant une longueur axiale d'aimant L_{M}, respectivement au moins un aimant permanent (28) disposé entre des griffes (17) voisines étant magnétisé pour empêcher un flux de fuite entre les griffes (17),
c) un rapport entre la longueur axiale de l'aimant L_{M} et le chevauchement axial des griffes L_{Ü} de L_{M}/L_{Ü} ≥ 0,81,
dans laquelle
d) les griffes (17) s'étendent axialement entre une racine de griffe (26) et une pointe de griffe (27) et
e) chaque griffe (17) présentant au niveau de la racine de griffe (26) une hauteur H_{W} et au niveau de la pointe de griffe (27) une hauteur H_{S},
**caractérisée en ce que**
f) le rapport entre la hauteur Hs au niveau de la pointe de griffe (27) et la hauteur H_{W} au niveau de la racine de griffe (26), vaut H_{S}/H_{W} ≥ 0,25.

2. Machine électrique selon la revendication 1,
**caractérisée en ce que**
le rapport entre la hauteur H_{S} au niveau de la pointe de griffe (27) et la hauteur H_{W} au niveau de la racine de griffe (26), vaut H_{S}/H_{W} ≥ 0,3.

3. Machine électrique selon la revendication 1,
**caractérisée en ce que**
pour le rapport entre la longueur de l'aimant L_{M} et le chevauchement des griffes L_{Ü}, on a 0,81 ≤ L_{M}/L_{Ü} ≤ 1,1.

4. Machine électrique selon la revendication 1,
**caractérisée en ce qu'**
une griffe (17) présente, au niveau de la racine de griffe (26), une surface de section transversale F_{W} et au niveau de la pointe de griffe (27) une surface de section transversale F_{S}.

5. Machine électrique selon la revendication 4,
**caractérisée en ce que**
pour le rapport entre la surface de section transversale F_{S} au niveau de la pointe de griffe (27) et la surface de section transversale F_{W} au niveau de la racine de griffe (26), on a F_{S}/F_{W} ≥ 0,04, en particulier F_{S}/F_{W} ≥ 0,08.

6. Machine électrique selon la revendication 1,
**caractérisée en ce que**
pour la hauteur H_{S} de la griffe (17) au niveau de la pointe de griffe (27), on a H_{S} ≥ 4 mm, en particulier H_{S} ≥ 7 mm.

7. Machine électrique selon l'une des revendications précédentes,
**caractérisée en ce que**
chaque aimant permanent (28) est disposé pour l'essentiel de façon centrale dans un espace de chevauchement (35) entre deux griffes (17) voisines.

8. Machine électrique selon la revendication 3,
**caractérisée en ce que**
pour le rapport entre la longueur de l'aimant L_{M} et le chevauchement de griffe L_{Ü}, on a 0,9 ≤ L_{M}/L_{Ü} ≤ 1,0.
